# EUROPÄISCHE PATENTANMELDUNG

(11) **EP 1 626 152 A1**
(43) Veröffentlichungstag der Anmeldung: **15.02.2006**
(21) Anmeldenummer: 05016148.8
(22) Anmeldetag: 26.07.2005
(51) Int. Cl.: E06B 9/40, E06B 9/68, B60J 7/00, B60J 1/20

(54) **Sonnenschutzrollo für Glasdächer**

(30) Priorität: 09.08.2004 DE 102004038756
(71) Anmelder: BOS GmbH & Co. KG, 73760 Ostfildern (DE)
(72) Erfinder: Belibel, Bouaziz, 73116 Wäschenbeuren (DE); Syrouchidis, Stilianos, 71334 Waiblingen (DE)
(74) Vertreter: Rüger, Barthelt & Abel Patentanwälte

(57) **Zusammenfassung**

Bei einem Sonnenschutzrollo (22), insbesondere für Glasdächer, ist eine Wickelwelle (25) vorhanden, zu der koaxial zwei Wickelscheiben (38,39) angeordnet sind. Zwischen der Rollowelle (25) und der jeweiligen Wickelscheibe (38,39) sitzt ein Federglied, mit dessen Hilfe ein Relativdrehmoment zwischen diesen beiden Bauteilen erzeugt werden kann. An der Wickelwelle (25) ist eine Rollobahn (23) befestigt, deren freie Kante (24) mit einem Zugseil (36,37) verbunden ist, das um eine Umlenkeinrichtung zu der jeweiligen Wickelscheibe (38,39) zurückführt. Mit Hilfe der Spanneinrichtung wird die Rollobahn (23) zwischen der freien Kante (24) und der Wickelwelle (25) gespannt gehalten.

## Beschreibung

Es ist bekannt in den Dächern von PKW's Schiebedächer vorzusehen. Solche Schiebedächer können aus Glasplatten bestehen, um einen Lichteinfall von oben zu ermöglichen. Schiebedächer mit Glasfenstern werden als Glasdächer bezeichnet, obwohl lediglich ein Teil des Fahrzeugdachs aus Glas hergestellt ist.

Eine andere Ausführungsform von Glasdächern sind so genannte Hubdächer, bei denen der Glaseinsatz lediglich gegenüber dem Dach angehoben, jedoch nicht verschoben werden kann.

Bei extrem starker Sonneneinstrahlung oder sehr hohen Temperaturen besteht die Notwendigkeit, die Sonneneinstrahlung durch das Glasdach hindurch abzumindern, um ein unnötiges Aufheizen des Fahrzeuginnenraums zu vermeiden.

Es ist deswegen weiterhin aus der Praxis bekannt, unterhalb des Glasdachs in dem Dachinnenraum, d.h. zwischen der Dachaußenhaut und dem Dachhimmel, Rollos unterzubringen, die bei Bedarf unterhalb des Glasdachs ausgebreitet werden können. Derartige bekannte Rollos umfassen eine in dem Dach gelagerte Wickelwelle und eine daran befestigte Rollobahn.

Bei aufwändigen Lösungen können die Rollobahnen mit Hilfe eines elektrischen Antriebs zwischen einer abschattenden Stellung und einer Stellung, in der das Glasdach freigegeben ist, hin und her bewegt werden.

Ausgehend hiervon ist es Aufgabe der Erfindung ein Sonnenschutzrollo für Glasdächer zu schaffen, das leicht von Hand zu bedienen ist und das in beliebigen Zwischenstellungen stehen bleibt.

Diese Aufgabe wird erfindungsgemäß durch ein Sonnenschutzrollo mit den Merkmalen des Anspruches 1 gelöst.

Bei dem neuen Sonnenschutzrollo ist eine Wickelwelle vorgesehen, die in der üblichen Weise in den Dachinnenraum zwischen dem Dachhimmel und der Dachaußenhaut drehbar gelagert ist. An dieser Wickelwelle ist mit einer Kante eine Rollobahn befestigt, an deren freier Kante zwei Zugglieder angreifen. Die beiden Zugglieder sind, jedes für sich, an einer zugehörigen Wickelscheibe verankert. Jede dieser beiden Wickelscheiben ist über einen zugehörigen Federmotor, der als Spanneinrichtung dient, mit der Wickelwelle gekuppelt.

Durch die beiden Spanneinrichtungen wird die Rollobahn zwischen der Wickelwelle und der Vorderkante gespannt gehalten. Gleichzeitig ist das System nach außen hin kräftefrei, d.h. die Vorderkante der Rollobahn kann in jede beliebige Stellung gebracht werden, ohne dass eine Kraft entsteht, die bestrebt ist, die freie Kante in irgend einer Richtung zu bewegen. Die Spannung bleibt vielmehr in dem System und hält die Spannung der Rollobahn aufrecht.

Mit anderen Worten: Die Kraft die bestrebt ist, die freie Kante der Rollobahn von der Wickelwelle weg zu ziehen ist genauso groß wie jene Kraft, die bestrebt ist, die Rollobahn auf der Wickelwelle aufzuwickeln.

Die Verwendung von zwei getrennten Spanneinrichtungen je Seite der Wickelwelle bietet den Vorteil einer wesentlich einfacheren Montage, weil die Spanneinrichtung an jeder Seite der Wickelwelle für sich montiert werden kann.

Jede der beiden Spanneinrichtungen hält das eigene Zugglied gespannt. Dadurch werden Längentoleranzen ausgeglichen. Kein Zugglied kann schlaff durchhängen. Es ist nicht nötig die Länge der Zugglieder exakt gleich zu bemessen und auf den Wickelscheiben fest zu legen. Hierin liegt ein weiterer erheblicher Montagevorteil.

Außerdem können in der Spanneinrichtung schwächere Federn verwendet werden, weil die Gesamtspannung in der Rollobahn durch zwei Federn aufgebracht wird. Die Verwendung zweier einzelner, schwächerer Federn vereinfacht die Konstruktion außerdem.

Die Spanneinrichtung auf jeder Seite der Wickelwelle kann von einer Schraubenfeder oder einer Spiralfeder gebildet sein, dabei ist die Verwendung einer Schraubenfeder besonders platzsparend, weil sie innerhalb der Wickelwelle angeordnet werden kann. Die Spiralfeder dagegen kann innerhalb der Wickelscheibe platziert werden.

Einfache Montageverhältnisse ergeben sich außerdem, wenn die Spanneinrichtung eine vormontierte Einheit bildet, die ein eigenes Gehäuse umfasst. Die Einheit kann als solche ohne weiteres in der Wickelwelle untergebracht und dort verankert werden.

Zur Lagerung der Wickelwelle kann eine Lagerwellenanordnung vorgesehen sein, die einerseits ein Widerlager für das Federelement der Spanneinrichtung bildet und andererseits ein Lager für die Wickelwelle bildet.

Die Lagerwellenanordnung kann ferner einen weiteren Lagerzapfen tragen, über den die gesamte Anordnung in der Karosserie gelagert ist.

Zu der Spanneinrichtung gehört ein in der Wickelwelle verankertes Widerlager, das beispielsweise das Gehäuse der Spanneinrichtung umfassen kann.

Das Zugglied auf jeder Seite kann von einem Seil oder einem Band gebildet sein. Dabei hat ein Seil den Vorteil beliebig umlenkbar zu sein, während Bänder ohne Beschädigung um geringere Biegeradien an der Umlenkstelle umlenkbar sind.

Die erfindungsgemäße Sonnenschutzrolloanordnung kann sowohl ohne als auch mit Führungsschienen ausgeführt sein. Führungsschienen haben den Vorteil, dass in jeder Zwischenstellung ein endseitiger Spriegel an der Rollobahn möglichst dicht neben dem Glasdach geführt wird.

Die Umlenkglieder für die Zugglieder sind zweckmäßigerweise lose drehbare Umlenkrollen, wodurch die Reibung und damit der Verschleiß gemindert wird.

Die elastischen Elemente der Spanneinrichtungen können gleichzeitig auch im Sinne einer Vereinfachung der Montage eingesetzt werden. Hierzu ist die Anordnung so getroffen, dass im nicht montierten Zustand die Lagerzapfen ein größeres Stück aus der Wickelwelle vorstehen und gegen die Kraft des Federglieds in die Wickelwelle zurückgedrückt werden, damit sie anschließend in eine entsprechende Lagerbohrung einschnappen können.

Im Übrigen sind Weiterbildungen der Erfindung Gegenstand von Unteransprüchen.

Das im Folgenden erläuterte Ausführungsbeispiel kann in vielfältiger Hinsicht abgewandelt werden, um es den jeweiligen Montage- und Herstellungsgegebenheiten anzupassen, wie dies für den Fachmann ohne Weiteres ersichtlich ist.

In der Zeichnung ist ein Ausführungsbeispiel des Gegenstandes der Erfindung dargestellt. Es zeigen:
- Fig. 1: ein Kraftfahrzeug in einer Ansicht von oben;
- Fig. 2: eine Prinzipdarstellung des erfindungsgemäßen Sonnenschutzrollos,
- Fig. 3: eine vormontierte Baueinheit der Spanneinrichtung des Sonnenrollos nach Fig. 2 in einer perspektivischen Explosionsdarstellung, teilweise aufgebrochen, und
- Fig. 4: eine Spanneinrichtung unter Verwendung einer Spiralfeder, in einer perspektivischen Explosionsdarstellung.

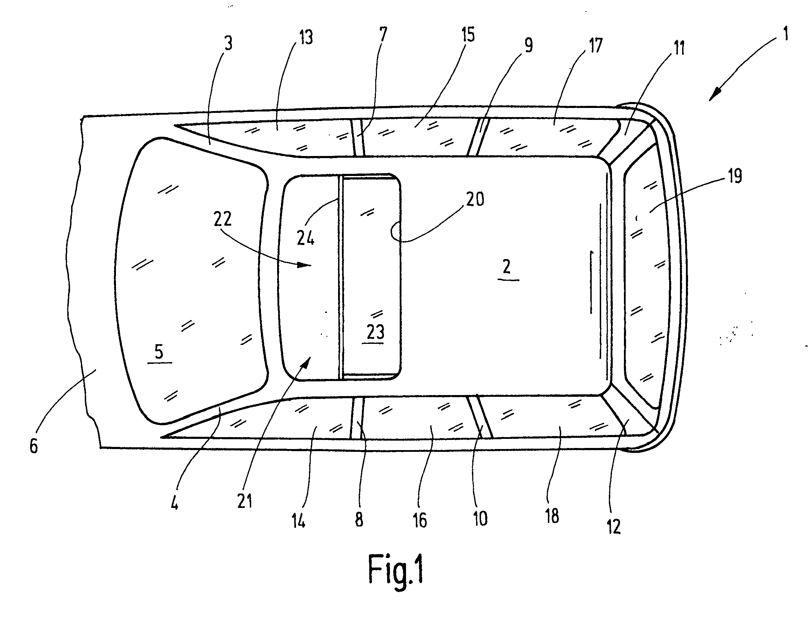

Fig. 1 zeigt in einer schematisierten Draufsicht eines Kombi-PKW 1. Zu Erkennen ist sein Dach 2, von dem an der Vorderkante zwei A-Säulen 3 und 4 ausgehen. Zwischen den beiden A-Säulen 3 und 4 befindet sich eine Windschutzscheibe 5, die an der Unterkante in eine Kühlerhaube 6 übergeht. Nach hinten folgen auf die beiden A-Säulen 3 und 4, B-Säulen 7 und 8, C-Säulen 9 und 10 sowie D-Säulen 11 und 12. Zwischen den Säulen 3...12 sind vordere Seitenscheiben 13, 14, hintere Seitenscheiben 15, 16 und Seitenscheiben des Kofferraums 17, 18 zu erkennen. Den Abschluss bildet eine Heckscheibe 19, die zwischen den beiden D-Säulen 11, 12 vorhanden ist.

Im vorderen Bereich des Daches 2 ist angrenzend an die Frontscheibe 5 eine Dachöffnung 20 enthalten, in der sich ein Dachfenster 21 befindet. Das Dachfenster 21 kann ein Glasschiebedach oder ein Glashubdach sein. Es kann sich auch um ein Glasdach handeln, das beide Funktionen miteinander vereint.

Unterhalb des Glasdaches 21 befindet sich ein Sonnenrollo 22, dessen Rollobahn 23 durch das Glasdach 21 zu erkennen ist. Die Rollobahn 23 endet an einer freien Kante 24, die etwa in der Mitte der Dachöffnung 20 steht.

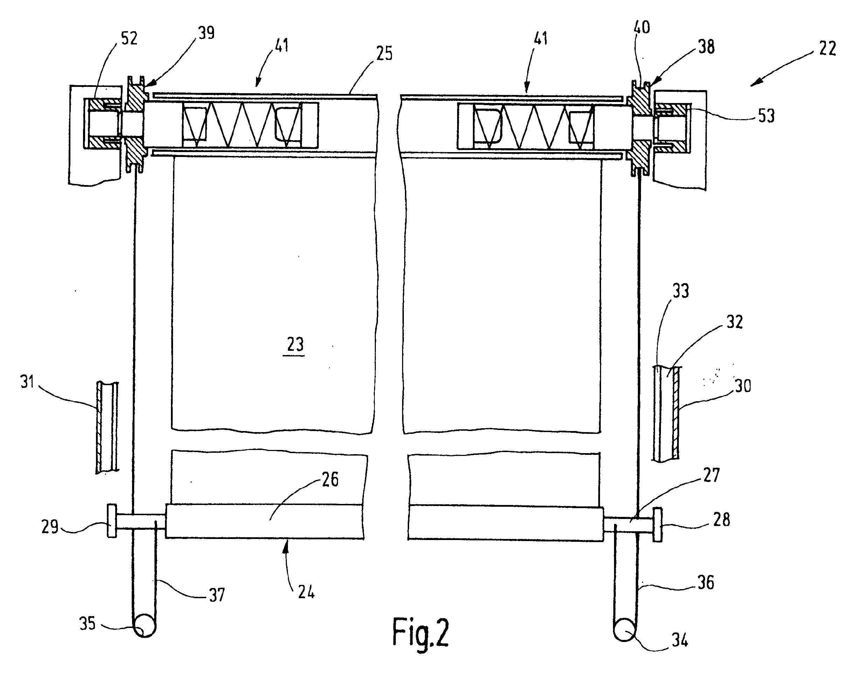

Der Aufbau des Sonnenrollos 22 ist in Fig. 2 schematisiert dargestellt.

Zu dem Sonnenrollo 22 gehört eine Wickelwelle 25, die in dem Dachinnenraum, d.h. zwischen der äußeren Dachhaut der Rohkarosserie und dem Himmel drehbar gelagert ist. An der Wickelwelle 25 ist mit einer Kante die Rollobahn 23 befestigt, deren Zuschnitt etwa der Größe und der Form des Dachausschnitts 20 entspricht.

Im Falle der Verwendung von zwei getrennten nebeneinander liegenden Sonnenrollos sind dementsprechend zwei Rollobahnen vorhanden, die in derselben Weise angetrieben sind, wie dies nachstehend erläutert ist.

Die von der Wickelwelle 25 abliegende freie Kante 24 ist zu einer Schlaufe 26 geformt, durch die ein Spriegel 27 hindurch führt. Der Spriegel 27 steht endseits über und trägt dort Führungsstücke 28, 29, mit denen er in Führungsschienen 30 und 31 geführt ist. Die Führungsschienen 30 und 31 laufen parallel zu der Fahrzeuglängsachse neben den Seitenkanten der Dachöffnung 20, vorzugsweise dort in den Himmel integriert.

Die beiden Führungsschienen 30, 31 sind die in dieser Technik üblichen C-förmigen Schienen mit einer Nutenkammer 32, die sich in Richtung auf einen Nutenschlitz 33 öffnet. Die Nutenschlitze 33 der beiden Schienen 30, 31 öffnen sich aufeinander zu.

Zum besseren Verständnis sind die beiden Führungsschienen 30, 31 längs ihres Rückens aufgeschnitten und außerdem sind sie lediglich abschnittsweise dargestellt.

An dem von der Wickelwelle abliegenden Ende der Führungsschienen 30, 31 sind zwei Umlenkrollen 34 und 35 lose drehbar gelagert. Die Umlenkrollen 34, 35 dienen der Umlenkung von zwei Zugseilen 36, 37, die bei der praktischen Ausführung durch die Führungsschienen 30, 31 laufen und einends an dem Spriegel 27 verankert sind. Das andere Ende jedes Zugseils 36, 37 führt zu einer zugehörigen Seilscheibe 38, 39. Die beiden Seilscheiben 38, 39 sind koaxial zu der rohrförmigen Wickelwelle 25 neben deren Stirnenden drehbar gelagert. Sie sind gegenüber der Wickelwelle 25 drehbar.

Jede Seilscheibe 38, 39 enthält eine Seilnut 40, die von Bordwänden begrenzt ist, um ein Herunterspringen des jeweils aufgewickelten Abschnitts des betreffenden Zugseils 36, 37 zu verhindern.

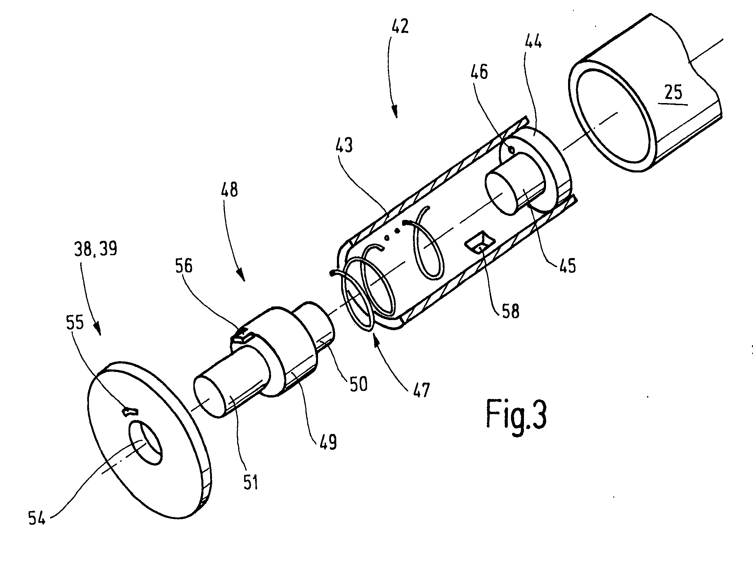

Zwischen jeder Seilscheibe 38, 39 und der Wickelwelle 25 ist eine zugehörige Spanneinrichtung 41 wirksam. Die beiden Spanneinrichtungen 41 sind baugleich, jedoch spiegelsymmetrisch. Ihr Aufbau wird nachstehend anhand von Fig.3 erläutert.

Zu jeder Spanneinrichtung 41 gehört ein becherförmiges Gehäuse 42, dass sich aus einem rohrförmigen Mantel 43 und einem in diesem Rohrstück 43 verankerten Bodenstück 44 zusammensetzt. Von dem Bodenstück 44 geht ein Zentrierzapfen 45 aus, der in den Rohrabschnitt 43 hineinragt und zu diesem koaxial ist. Neben dem Zentrierzapfen 45 enthält das Bodenstück 44 eine Verankerungsbohrung 46. Das Bodenstück 44 bildet so ein Widerlager für eine Schraubenfeder 47, in die der Zentrierzapfen 45 hineinragt. Die Schraubenfeder 47 ist als Runddrahtfeder veranschaulicht. Bevorzugt wird zur Herstellung der Feder jedoch ein Draht mit rechteckigem Querschnitt verwendet, um eine möglichst gute Raumausnutzung zu erzielen. Die lange Seite des Rechtecks liegt etwa parallel zu dem Radius der Schraubenfederwindung.

Das dem Bodenstück 44 benachbarte Ende der Feder 47 ist, wie dargestellt, achsparallel abgebogen und steckt im montierten Zustand in der Bohrung 46.

In dem offenen Ende des becherförmigen Gehäuses 42 steckt drehbar eine Lagerwelle 48. Die Lagerwelle 48 weist einen Mittelteil 49 auf, das so bemessen ist, dass es mit geringem Radialspiel in dem becherförmigen Gehäuse 42 drehbar ist. Auf seiner vom Betrachter abgekehrten Rückseite geht das Mittelstück 49 in einen Zentrierzapfen 51 über, auf dem das benachbarte Ende der Schraubenfeder 47 sitzt. Zur Verankerung der Schraubenfeder 47 enthält das Mittelstück 50 eine Aufnahmebohrung, ähnlich der Bohrung 46, in die im montierten Zustand das achsparallel abgewinkelte Ende der Schraubenfeder 47 eingesteckt ist.

Auf der von dem Zentrierzapfen 50 abliegenden Seite trägt das Mittelstück 49 koaxial einen Lagerzapfen 51. Der Lagerzapfen 51 dient einerseits als Sitz für die bereits erwähnte Seilscheibe 38 bzw. 39. Sein über die Seilscheibe 38, 39 überstehendes Ende steckt in einer karosseriefesten Lagerbuchse, wie sie in Fig. 2 bei 52 bzw. 53 veranschaulicht sind.

Hierzu ist der Lagerzapfen 51 deutlich länger, als es der Dicke der Seilscheibe 38, 39 entspricht.

Die Seilscheibe 38, 39 enthält eine Lagerbohrung 54, die stramm auf den Zapfen 21 passt. Seitlich versetzt neben der Bohrung 54 enthält jede Seilscheibe 38, 39 eine Mitnehmeröffnung 55, in die im montierten Zustand ein Mitnehmerzapfen 56 eingreift, der von dem Mittelstück 49 ausgeht und sich parallel neben dem Zapfen 51 erstreckt.

Die Darstellung nach Fig. 3 ist vereinfacht insofern, als die erforderlichen Maßnahmen zum dauerhaften Verankern der Seilscheiben 38, 39 auf den Zapfen 51 ebenso wenig veranschaulicht sind, wie die Maßnahmen, die dazu dienen, die Lagerwelle 48 axial in dem Gehäuse 42 zu sichern. Schließlich sind auch jene Maßnahmen nicht veranschaulicht, die dazu dienen, die Feder 47 im vorgespannten Zustand zu sichern. Solche Maßnahmen sind beispielsweise in der auf die Anmelderin zurückgehenden Patentanmeldung DE 102 01 786 A1 erläutert ist, auf die hier ausdrücklich Bezug genommen ist.

Das becherförmige Gehäuse 42 jeder Spanneinrichtung 41 ist drehfest mit der rohrförmigen Wickelwelle 25 verbunden. Das Gehäuse 42 enthält eine rechteckige Öffnung 58, in die während der Montage eine Nase oder eine Lasche eingedrückt wird, die einstückiger Bestandteil der Wickelwelle 25 ist.

Die Wirkungsweise der Anordnung ist wie folgt:

Von beiden Enden der Wickelwelle 25 her wird je eine als selbstständige Einheit ausgeführte Spanneinrichtung 41 eingesteckt. Die beiden Spanneinrichtungen 41 unterscheiden sich voneinander lediglich hinsichtlich des Wickelsinns der jeweils verwendeten Schraubenfeder 47. Ansonsten sind die beiden Spanneinrichtungen 41 baugleich. Nach dem Einstecken der Gehäuse 42 werden diese in der Wickelwelle 25 verstemmt, indem Material in Gestalt einer Lasche oder Sicke aus der Wickelwelle 25 in die Öffnung 58 eingedrückt wird. Sodann wird jede Spanneinrichtung 41 um einige Umdrehungen aufgezogen, und beispielsweise, wie in der oben erwähnten Druckschrift beschrieben, gesichert. Sodann wird mit jeder Seilscheibe 38, 39 das zugehörige Zugseil 36, 37 einends verbunden und es wird eine entsprechende Zahl von Seilwindungen auf die betreffende Seilscheibe 38, 39 aufgelegt.

Mit der Wickelwelle 25 wird die Rollobahn 23 mit der entsprechenden Kante verklebt. Das so erhaltene Gebilde wird im Fahrzeug montiert, indem die Lagerzapfen 51 in die Lagerbuchsen 52, 53 eingefädelt werden. Die Zugseile werden sodann durch die Führungsschienen 30, 31, in die zuvor die Führungsstücke 28, 29 des Spriegels 27 eingesteckt wurden, hindurchgefädelt und um die zugehörige Umlenkrolle 34, 35 herumgeführt. Anschließend werden die noch freien Enden der Zugseile 36, 37 mit dem Spriegel 27 verbunden.

Nachdem die Montage abgeschlossen ist, werden die Sicherungen der Spanneinrichtungen 41 gezogen, damit die von der Spanneinrichtung 41 ausgehende Kraft frei werden kann. Es entsteht nun hierdurch ein Relativdrehmoment zwischen der Wickelwelle 25 einerseits und den beiden Seilscheiben 38. Das Drehmoment ist so gerichtet, dass es einerseits bestrebt ist, die Rollobahn 23 auf die Wickelwelle 25 aufzuwickeln, andererseits aber auch die Zugseile 36, 37 auf die Seilscheiben 38, 39 aufzuspulen. Auf diese Weise wird die Rollobahn 23 in dem nicht aufgewickelten Bereich zwischen der Wickelwelle 25 und dem Spriegel 27 gespannt gehalten. Die Spannkraft entspricht dem Drehmoment, das die beiden Spanneinrichtungen 41 erzeugen können.

Beim Ausfahren der Rollobahn 23 verändert sich der Ballendurchmesser, während pro Umdrehung der Seilscheibe etwa gleichviel Zugseil auf- oder abgewickelt wird. Dementsprechend kommt eine Relativdrehung zwischen der Wickelwelle 25 und den beiden Seilscheiben 38, 39 zustande. Diese Relativdrehung wird von den Spanneinrichtungen 41 aufgenommen, und zwar in jeder Betriebsstellung des Sonnenschutzrollos 22.

Andererseits gibt es nach außen hin keine freien Kräfte, so dass der Benutzer jederzeit mit Hilfe eines nicht weiter gezeigten Griffs im Bereich der freien Kante 24 von Hand das Sonnenrollo 22 vor der Öffnung 20 ausbreiten kann oder den Sonnenschutz zurückschieben kann, wobei die Rollobahn 23 selbsttätig auf der Wickelwelle 25 aufgewickelt wird.

Die Kraft, die der Benutzer aufbringen muss, um die Rollobahn hin und her zu schieben ist im Wesentlichen nur jene Kraft, die notwendig ist, um die Führungsstücke 28, 29 durch die Führungsschiene 30, 31 gleiten zu lassen. Somit wird ein Sonnenrollo geschaffen, dass leicht von Hand zu betätigen ist. Außerdem ist die Montage wesentlich vereinfacht, weil kein gemeinsamer Federantrieb vorgesehen ist, um die beiden Seilscheiben 38, 39 mit der Wickelwelle 25 zu kuppeln. Vielmehr ist jede Seilscheibe für sich mit der Wickelwelle 25 verbunden, was die Montage erheblich vereinfacht, denn die Wickelwelle 25 hat eine beachtliche Längn entsprechend der Breite des Fahrzeugs im Dachbereich.

Die Montage der Wickelwelle 25 kann noch vereinfacht werden, wenn beispielsweise die Lagerwelle 48 in axialer Richtung in dem Gehäuse 42 verschiebbar gelagert ist. Hierzu wird eine Schraubenfeder verwendet, die im entspannten Zustand die Lagerwelle 48 in axialer Richtung vorspannt und andererseits Platz lässt, damit die Lagerwelle 48 ein Stück weit in das Gehäuse 42 zurückgedrückt werden kann.

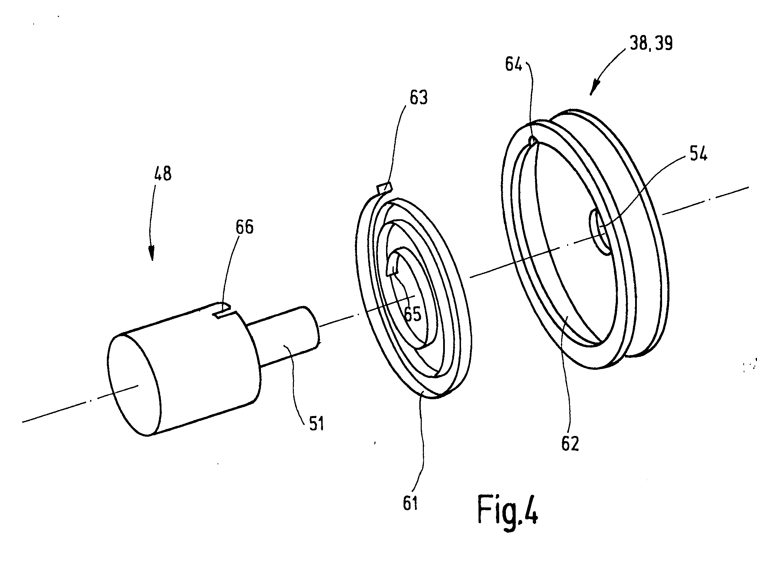

Anstelle einer Schraubenfeder 47 kann die kinematische Verbindung zwischen der Wickelwelle 25 und der Seilscheibe 38, 39 auch mit Hilfe einer Spiralfeder bewerkstelligt werden, wie dies in Fig. 4 schematisch angedeutet ist. Die Seilscheibe 38, 39 ist für sich becherförmig ausgeführt und nimmt, ähnlich einer Uhrwerksfeder, eine spiralförmige Feder 61 in ihrem Innenraum 62 auf. Die Spiralfeder 61 ist eine Blattfeder, deren außenliegendes Ende 63 in einer Nut 64 des Federgehäuses verankert ist. Das innenliegende Ende 65 sitzt in einem Radialschlitz 66 der modifizierten Lagerwelle 48. Die Lagerwelle 48 sitzt bei diesem Ausführungsbeispiel drehfest in der rohrförmigen Wickelwelle 25, so dass das Gehäuse 42 entbehrlich ist. Auf dem Lagerzapfen 51 steckt die becherförmige Seilscheibe 38, 39 drehbar, wodurch das gewünschte Drehmoment zwischen der Seilscheibe 38, 39 und der Wickelwelle 25 erzeugt werden kann.

Bei einem Sonnenschutzrollo, insbesondere für Glasdächer, ist eine Wickelwelle vorhanden, zu der koaxial zwei Wickelscheiben angeordnet sind. Zwischen der Rollowelle und der jeweiligen Wickelscheibe sitzt ein Federglied, mit dessen Hilfe ein Relativdrehmoment zwischen diesen beiden Bauteilen erzeugt werden kann. An der Wickelwelle ist eine Rollobahn befestigt, deren freie Kante mit einem Zugseil verbunden ist, das um eine Umlenkeinrichtung zu der jeweiligen Wickelscheibe zurückführt. Mit Hilfe der Spanneinrichtung wird die Rollobahn zwischen der freien Kante und der Wickelwelle gespannt gehalten.

## Patentansprüche

1. Sonnenschutzrollo für Glasdächer von Kraftfahrzeugen,
mit einer drehbar gelagerten Wickelwelle (25),
mit einer Rollobahn (23), die mit einer Kante an der Wickelwelle (25) befestigt ist und die eine freie Kante (24) aufweist,
mit einer ersten Spanneinrichtung (41), die kinematisch zwischen der Wickelwelle (25) und einer Wickelscheibe (38,39) liegt,
mit einer zweiten Spanneinrichtung (41), die kinematisch zwischen der Wickelwelle (25) und einer zweiten Wickelscheibe (38,38) liegt,
mit einem ersten linienförmigen Zugglied (36,37), das mit einem Ende an der ersten Wickelscheibe (38,39) festgelegt und mit dem anderen Ende mit der freien Kante (24) der Rollobahn (23) verbunden ist,
mit einem zweiten linienförmigen Zugglied (36,37), das mit einem Ende an der zweiten Wickelscheibe (38,39) festgelegt und mit dem anderen Ende mit der freien Kante (24) der Rollobahn (23) verbunden ist,
mit zwei Umlenkgliedern (34,35) die aus der Sicht der Wickelwelle (25) jenseits jener Stelle angeordnet sind in die die freie Kante (24) der Rollobahn (23) maximal bringbar ist, wobei um jedes Umlenkglied (34,35) das jeweils zugehörige Zugglied (36,37) herumläuft.

2. Sonnenschutzrollo nach Anspruch 1, **dadurch gekennzeichnet, dass** die Wickelwelle (25) eine rohrförmige Wickelwelle ist.

3. Sonnenschutzrollo nach Anspruch 1, **dadurch gekennzeichnet, dass** die erste und/oder die zweite Spanneinrichtung (41) von einer Schraubenfeder (47) oder einer Spiralfeder (61) gebildet ist.

4. Sonnenschutzrollo nach Anspruch 1, **dadurch gekennzeichnet, dass** die erste und/oder die zweite Spanneinrichtung (41) in oder neben der Wickelwelle (25) angeordnet ist.

5. Sonnenschutzrollo nach Anspruch 1, **dadurch gekennzeichnet, dass** die erste und/oder die zweite Spanneinrichtung (41) eine vormontierte Einheit mit einem eigenen Gehäuse (42) bildet.

6. Sonnenschutzrollo nach Anspruch 1, **dadurch gekennzeichnet, dass** die Spanneinrichtung (41) eine Lagerwellenanordnung (48) aufweist, die mittelbar eine Lagerfläche für die Wickelwelle (25) umfasst.

7. Sonnenschutzrollo nach Anspruch 1, **dadurch gekennzeichnet, dass** die Lagerwellenanordnung (48) drehfest mit der zugehörigen Wickelscheibe (38,39) verbunden ist.

8. Sonnenschutzrollo nach Anspruch 1, **dadurch gekennzeichnet, dass** die Lagerwellenanordnung (48) einen Lagerzapfen (51) umfasst, der, ausgehend von der Wickelwelle (25), über die Wickelscheibe (38,39) nach außen übersteht und der zur Lagerung der Wickelwelle (25) und der Wickelscheibe (38,39) dient.

9. Sonnenschutzrollo nach Anspruch 1, **dadurch gekennzeichnet, dass** die Spanneinrichtung (41) ein in der Wickelwelle (25) angeordnetes Widerlager (44) umfasst.

10. Sonnenschutzrollo nach Anspruch 1, **dadurch gekennzeichnet, dass** das erste und/oder das zweite linienförmige Zugglied (36,37) von einem Seil gebildet ist.

11. Sonnenschutzrollo nach Anspruch 1, **dadurch gekennzeichnet, dass** das erste und/oder das zweite Zugglied (36,37) von einem Band gebildet ist.

12. Sonnenschutzrollo nach Anspruch 1, **dadurch gekennzeichnet, dass** der freien Kante (24) der Rollobahn (23) ein Spriegel (27) zugeordnet ist, an dessen Enden das erste und das zweite Zugglied (36,37) verankert sind.

13. Sonnenschutzrollo nach Anspruch 12, **dadurch gekennzeichnet, dass** zwei Führungsschienen (30,31) vorgesehen sind, in denen der Spriegel (27) endseitig geführt ist.

14. Sonnenschutzrollo nach Anspruch 1, **dadurch gekennzeichnet, dass** die Umlenkglieder (34,35) jeweils von einer lose drehbaren Umlenkrolle gebildet sind.

15. Sonnenschutzrollo nach Anspruch 1, **dadurch gekennzeichnet, dass**, zumindest eine der Spanneinrichtungen (41), derart ausgebildet ist, dass sie eine zusätzliche axiale Kraft auf einen Lagerzapfen (51) ausübt, derart, dass der Lagerzapfen (51) in eine Richtung von der Wickelwelle (25) weg vorgespannt ist gegenüber der er axial verschieblich gelagert ist.

16. Sonnenschutzrollo nach Anspruch 1, **dadurch gekennzeichnet, dass** die Rollobahn (23) einen Zuschnitt aufweist, der im Wesentlichen auf die Form des Glasdaches (20,21) abgestimmt ist.
